# EUROPÄISCHE PATENTSCHRIFT

(11) **EP 0 986 695 B1**
(45) Veröffentlichungstag und Bekanntmachung des Hinweises auf die Patenterteilung: **19.06.2002**
(21) Anmeldenummer: 98937432.7
(22) Anmeldetag: 29.05.1998
(51) Int. Cl.: F01K 21/04, F03G 6/06

(54) **ENERGIEERZEUGUNGSANLAGE**
ENERGY GENERATING INSTALLATION
INSTALLATION DE PRODUCTION D'ENERGIE

(30) Priorität: 05.06.1997 DE 19723543
(43) Veröffentlichungstag der Anmeldung: 22.03.2000
(73) Patentinhaber: Deutsches Zentrum für Luft- und Raumfahrt e.V., 53175 Bonn (DE)
(72) Erfinder: HENNECKE, Klaus, D-53797 Lohmar (DE)
(74) Vertreter: Selting, Günther, Dipl.-Ing.
(86) Internationale Anmeldenummer: EP9803235
(87) Internationale Veröffentlichungsnummer: WO9855740

(56) Entgegenhaltungen:
- WO-A-82/00493
- WO-A-96/31697
- DE-A- 19 538 670

## Beschreibung

Die Erfindung betrifft eine Energieerzeugungsanlage mit einer Gasturbine mit Dampfeindüsung, wobei für die Dampferzeugung ein Abhitzekessel vorgesehen ist, der zusätzlich an einen externen Verbraucher Prozeßdampf liefert.

Bekannt sind Energieerzeugungsanlagen, bei denen eine Gasturbine mit zusätzlicher Dampfinjektion betrieben wird, wobei die Dampferzeugung in einem Abhitzekessel erfolgt, der von den Abgasen der Dampfturbine beheizt ist und eine Zusatzbefeuerung aufweisen kann (siehe WO-A-8200493). Konsequent durchgeführt ist dieses Prinzip beim Cheng-Cycle, bei dem die gesamte ohne Zusatzfeuerung erzeugbare Dampfmenge in die Gasturbine eingespeist werden kann. Eine derartige Energieerzeugungsanlage ist in dem Prospekt der Firma ELIN Energieversorgung Gesellschaft mbH "Cheng Cycle Serie 7, Kraft-Wärme-Kopplung mit Gasturbinen" beschrieben. Der Cheng-Cycle zeichnet sich im Vergleich zu Dampfturbinenanlagen durch geringere Investitionskosten aus, weil im Abhitzekessel moderate Drücke und Temperaturen herrschen und ein Kondensator nicht erforderlich ist.

Bekannt sind ferner solare Dampferzeuger, die Sonnenenergie zur Dampferzeugung benutzen (siehe WO-A-9631697). Typisch hierfür sind Parabolrinnenkollektoren, welche die Sonnenenergie mit Parabolspiegeln auf ein Rohr konzentrieren, das von einem Wärmeträgermedium durchströmt wird. Ein Problem bei der Verwendung solarer Dampferzeuger besteht in der Unzuverlässigkeit der verfügbaren Sonnenenergie. Es ist daher erforderlich, zusätzlich eine Befeuerung mit Brennstoff vorzusehen. Aufgrund der mit solarer Energie erreichbaren Dampfzustände kann der Brennstoff bei der Zusatzfeuerung nur mit geringem energetischen Wirkungsgrad genutzt werden. Bei Hybridanlagen sind negative Wechselwirkungen zwischen solarem und konventionellen Anlagenteil in der Regel nicht zu vermeiden (z.B. reduzierter Wirkungsgrad im fossilen Betrieb, Einschränkungen des Betriebsbereichs des Solarfeldes). Solardampfeindüsung in eine Gasturbine ist für die reine Stromerzeugung nicht attraktiv, da die im Abhitzekessel erzeugbare Dampfmenge das Schluckvermögen der Turbine bereits deckt bzw. übersteigt. Die Notwendigkeit eines 100 %-igen fossilen Back-up führte bisher dazu, daß eine Solaranlage nicht optimal in ein dafür ausgelegtes Gesamtsystem eingebunden, sondern einem konventionellen System "aufgesetzt" wurde. Die zusätzlich erzeugte solare Wärme ist in solchen Systemen nur eingeschränkt nutzbar. Dies reduziert den Nutzungsgrad der Solaranlage und die erreichbaren Brennstoffeinsparungen.

Der Erfindung liegt die Aufgabe zugrunde, eine Energieerzeugungsanlage zu schaffen, die sowohl mit fossiler Energie als auch mit Solarenergie gespeist wird und flexibel auf das jeweilige Angebot an Solarenergie reagieren kann, um in jedem Betriebszustand eine Gasturbine mit hohem Wirkungsgrad betreiben zu können.

Die Lösung dieser Aufgabe erfolgt erfindungsgemäß mit den im Patentanspruch 1 angegebenen Merkmalen.

Die erfindungsgemäße Energieerzeugungsanlage arbeitet generell nach dem Cheng-Cycle mit allen dadurch erzielbaren Vorteilen. Hierbei ist zusätzlich zu dem Verdampfer, der mit der Dampftrommel einen ersten Kreislauf bildet, an die Dampftrommel ein zweiter Kreislauf angeschlossen, der einen solaren Dampferzeuger enthält. Hierbei werden die in dem ersten Kreislauf des Cheng-Cycle auftretenden moderaten Druck- und Temperaturverhältnisse ausgenutzt, um eine direkte Anschaltung eines solaren Dampferzeugers durchzuführen. Der durch das Solarfeld erzeugte Dampf wird in dem Überhitzer des Wärmetauschers aufgeheizt und kann als Sattdampf in der Gasturbine mit Dampfeindüsung je nach Bedarf zur Erhöhung der Stromproduktion oder zur Reduzierung des Brennstoffbedarfs genutzt werden. Die Dampfeindüsung in die Gasturbine erfordert nur moderate Drücke (etwa 20 bar). Die damit verbundenen niedrigen Siedetemperaturen wirken sich günstig auf den Wirkungsgrad des Solarerzeugers aus.

Besondere Vorteile ergeben sich im Hinblick auf die Direktverdampfung. Die Sattdampferzeugung im Rezirkulationsverfahren erlaubt einen stabilen Betrieb des solaren Dampferzeugers ohne hohe Anforderungen an die Regelung, auch bei schwankendem Strahlungsangebot. Der solare Dampferzeuger kann als Parabolrinnenkollektor ausgebildet sein, in dem das zirkulierende Wasser direkt verdampft wird. Andererseits besteht auch die Möglichkeit, ein Wärmeträgermedium, z.B. Öl, solar aufzuheizen und die aufgenommene Wärmeenergie mit einem Wärmetauscher an Wasser abzugeben. Die Temperatur des von dem solaren Dampferzeuger gelieferten Dampfs sollte bei etwa 200°C liegen.

Weitere Merkmale und Vorteile der Erfindung ergeben sich aus der nachfolgenden Beschreibung eines Ausführungsbeispiels sowie den Unteransprüchen.

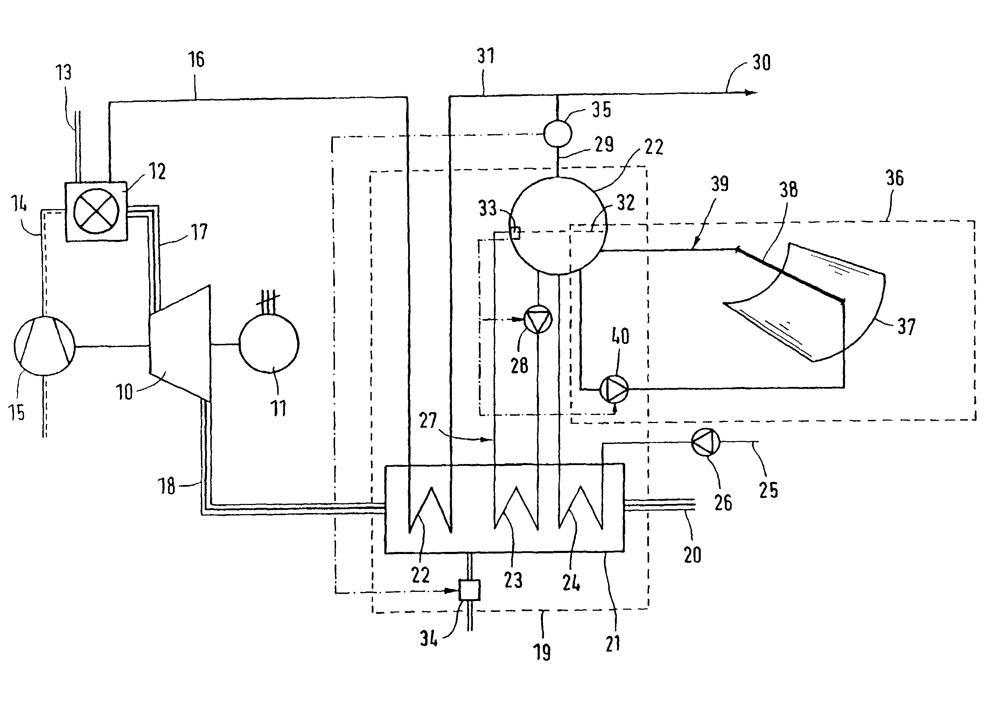

Im folgenden wird unter Bezugnahme auf die einzige Figur der Zeichnung ein Ausführungsbeispiel der Erfindung näher erläutert.

In der Zeichnung ist die Energieerzeugungsanlage schematisch dargestellt.

Die Energieerzeugungsanlage weist eine Gasturbine 10 mit Dampfeindüsung auf, die einen Stromgenerator 11 antreibt. Der Einlaß der Gasturbine ist mit einem Brenner 12 verbunden, dem über eine Brennstoffleitung 13 flüssiger oder gasförmiger Brennstoff und über eine Luftleitung 14 Druckluft zugeführt wird, die in einem von der Gasturbine 10 angetriebenen Kompressor 15 erzeugt wird. In den Brenner 12 mündet ferner eine Dampfleitung 16 zur Eindüsung von Dampf in die Brennkammer. Die in dem Brenner 12 erzeugten Verbrennungsgase werden mit dem eingedüsten Dampf vermischt und in den Einlaß 17 der Gasturbine 10 geliefert.

Die expandierten Abgabe der Gasturbine 10 werden vom Auslaß 18 durch einen Abhitzekessel 19 geleitet und einer Abgasleitung 20 zugeführt, in der durch Kondensation eine Wiedergewinnung des Wassers erfolgen kann.

Der Abhitzekessel 19 enthält einen Wärmetauscher 21 und eine Dampftrommel 22. Die Abgase der Dampfturbine 10 strömen in den Wärmetauscher 21, um Wärme abzugeben. Diese Wärme wird drei Wärmeaufnehmern zugeführt, die in dieser Reihenfolge im Wärmetauscher 21 angeordnet sind: einem Überhitzer 22, einem Verdampfer 23 und einem Vorwärmer 24. Die Abgase haben am Überhitzer 22 die größte Temperatur und am Vorwärmer 24 die niedrigste Temperatur, weil sie einen Teil ihrer Wärme bereits abgegeben haben.

Der Vorwärmer 24 ist mit seinem Einlaß an eine Speisewasserleitung 25 angeschlossen, die eine Speisewasserpumpe 26 enthält, und mit seinem Auslaß an die Dampftrommel 22.

Der Verdampfer 23 bildet mit der Dampftrommel 22 einen ersten Kreislauf 27, in welchem eine Pumpe 28 enthalten ist. Der Einlaß der Pumpe 28 befindet sich in Bodennähe der Dampftrommel 22, so daß die Pumpe Wasser aus der Dampftrommel 22 herauspumpt. Die Rückleitung des Kreislaufs 27 führt oberhalb des in der Dampftrommel 22 herrschenden Wasserstandes in die Dampftrommel hinein.

Im oberen Bereich enthält die Dampftrommel 22 einen Dampfauslaß 29, der einerseits mit einem Auslaß 30 für Prozeßdampf und andererseits mit einer zu dem Überhitzer 22 führenden Dampfleitung 31 verbunden ist. Von der Dampfleitung 31 strömt der Dampf durch den Überhitzer 22 zu der Dampfleitung 16 für die Dampfeindüsung.

Die Dampftrommel 22 besteht aus einem Behälter, in dem sich ein Wasserpegel 32 ausbildet. Über dem Wasserpegel 32 befindet sich Dampf bei einem Druck von etwa 20 bar und einer Temperatur von etwa 200°C. Die Höhe des Wasserpegels 32 wird von einem Sensor 33 erkannt, der die Pumpe 28 in der Weise regelt, daß bei einem zu hohen Pegelstand der Durchfluß durch den ersten Kreislauf 27 vergrößert und bei einem zu niedrigen Pegelstand der Durchfluß verringert wird.

Der Abhitzekessel 19 ist mit einem Brenner 34 versehen, um dem Wärmetauscher 21 zusätzliche Wärme zuführen zu können. Der Brenner 34 wird in Abhängigkeit von dem Signal eines Durchflußmessers 35 gesteuert, der in dem Dampfauslaß 29 enthalten ist. Wenn die der Dampftrommel 22 entnommene Dampfmenge groß ist, wird die Leistung des Brenners 34 erhöht. Ferner steuert der Durchflußmesser 35 die Speisewasserpumpe 26. Wird der Dampftrommel 22 viel Dampf entnommen, dann muß entsprechend mehr Speisewasser zugeführt werden.

Erfindungsgemäß ist an die Dampftrommel 22 ein solarer Dampferzeuger 36 angeschlossen, der im vorliegenden Fall aus einem Solarfeld aus Rinnenkollektoren besteht. Das Solarfeld enthält rinnenförmige Reflektoren 37, die das Sonnenlicht auf ein Absorberrohr 38 konzentrieren, welches von Wasser durchströmt ist. Das Absorberrohr 38 ist mit der Dampftrommel 22 zu einem zweiten Kreislauf 39 verbunden, der eine Pumpe 40 für die Zirkulation enthält. Die Pumpe 40 ist in Abhängigkeit von dem Signal des Pegelsensors 33 in der Weise gesteuert, daß bei sinkendem Pegel 32 die Pumpenleistung vergrößert wird.

Anstelle des Solarfeldes aus direktverdampfenden Kolektoren kann auch ein solarer Dampferzeuger mit zwischengeschalteten Thermoölkreislauf verwendet werden.

Die Zusatzfeuerung mit dem Brenner 34 wird so geregelt, daß die Summe der gemessenen Dampfmassenströme für den Prozeßdampf (am Auslaß 30) und den Injektionsdampf der vorgegebenen Gesamtmenge entspricht. Die Speisewasserpumpe 26 wird entsprechend der jeweiligen momentanen Dampfproduktion geregelt.

Änderungen der Sonneneinstrahlung auf den solaren Dampferzeuger 36 führen zu einer Änderung der Dampfproduktion des solaren Dampferzeugers und damit zu einer Änderung des Wasserpegels 32 in der Dampftrommel 22. Diese Pegeländerung dient als Signal zur Anpassung der Massenströme im solaren Dampferzeuger 36 bzw. im Abhitzekessel 22. Bei sinkendem Flüssigkeitspegel wird die Förderleistung der Pumpe 40 erhöht und diejenige der Pumpe 28 reduziert. Gleichzeitig wird die Brennstoffzufuhr des Brenners 34 gedrosselt. Bei steigendem Flüssigkeitspegels 32 wird umgekehrt verfahren.

Falls bei guter Sonneneinstrahlung und geringem Bedarf an Prozeßdampf die Dampfproduktion den Bedarf übersteigt, kann die Stromerzeugung durch Dampfeindüsung bis zur Maximalleistung der Gasturbine 10 erhöht werden. Der Überschuß wird dann in das Stromversorgungsnetz eingespeist. Alternativ hierzu kann auch bei gleichzeitiger Dampfinjektion die Brennstoffzufuhr zur Gasturbine so weit reduziert werden, daß gerade der Eigenbedarf an Strom und Prozeßdampf gedeckt wird.

Die Dampfeindüsung in die Gasturbine 10 erfordert nur moderate Drücke. Die damit verbundenen niedrigen Siedetemperaturen wirken sich günstig auf den Wirkungsgrad des Solarfeldes 37 aus. Die Maschinenanlage kann in relativ kleiner Anlagengröße realisiert werden. Die Sattdampferzeugung im Rezirkulationsverfahren erlaubt einen stabilen Betrieb des solaren Dampferzeugers ohne hohe Anforderungen an die Regelung, auch bei schwankendem Strahlungsangebot.

Durch die Flexibilität des Gasturbinenprozesses mit Dampfeindüsung kann der solarerzeugte Dampf mit gutem Wirkungsgrad genutzt werden. Dennoch wird der Wirkungsgrad der fossilen Verbrennung nicht durch Teillastbetrieb verschlechtert.

## Patentansprüche

1. Energieerzeugungsanlage mit
- einer einen Stromgenerator (11) antreibenden Gasturbine (10),
- einem Abhitzekessel (19), der einen mit dem Auslaß (18) der Gasturbine (10) verbundenen Wärmetauscher (21) und eine Dampftrommel (22) enthält,
- wobei der Wärmetauscher (21) aufweist:
- einen Überhitzer (22), der von der Dampftrommel (22) gelieferten Dampf aufheizt und zur Dampfeindüsung an die Gasturbine (10) liefert,
- einen mit der Dampftrommel (22) einen ersten Kreislauf (27) bildenden Verdampfer (23),
- und einen Vorwärmer (24), der Speisewasser aufheizt und an die Dampftrommel (22) liefert,
**dadurch gekennzeichnet,**
**daß** an die Dampftrommel (22) ein solarer Dampferzeuger (36) in einem zweiten Kreislauf (39) angeschlossen ist.

2. Energieerzeugungsanlage nach Anspruch 1, **dadurch gekennzeichnet, daß** die Dampftrommel (22) mit einem Prozeßdampf an einen externen Verbraucher liefernden Dampfauslaß (30) verbunden ist.

3. Energieerzeugungsanlage nach Anspruch 1 oder 2, **dadurch gekennzeichnet, daß** der erste Kreislauf (27) eine Pumpe (28) enthält, die in Abhängigkeit von dem Wasserpegel (32) in der Dampftrommel (22) gesteuert ist.

4. Energieerzeugungsanlage nach einem der Ansprüche 1 bis 3, **dadurch gekennzeichnet, daß** der zweite Kreislauf (39) eine Pumpe (40) enthält, die in Abhängigkeit von dem Wasserpegel (32) in der Dampftrommel (22) gesteuert ist.

5. Energieerzeugungsanlage nach einem der Ansprüche 1 bis 4, **dadurch gekennzeichnet, daß** der Abhitzekessel (19) einen Brenner (34) aufweist, der in Abhängigkeit von der die Dampftrommel (22) verlassenden Dampfmenge gesteuert ist.

6. Energieerzeugungsanlage nach einem der Ansprüche 1 bis 5, **dadurch gekennzeichnet, daß** das Speisewasser über eine Speisewasserpumpe (26) geliefert wird, die in Abhängigkeit von der die Dampftrommel (22) verlassenden Dampfmenge gesteuert ist.

## Claims

1. Energy generating installation comprising
- a gas turbine (10) operating a power generator (11),
- a waste heat boiler (19) containing a heat exchanger (21) connected with the outlet (18) of the gas turbine (20), and a steam drum (22),
- wherein the heat exchanger (21) comprises:
- a superheater (22) heating steam supplied from the steam drum (22) and feeding it to the gas turbine (10) for steam injection purposes,
- an evaporator (23) forming, together with the steam drum (22), a first circuit (27),
- and a preheater (24) heating the feedwater and feeding it to the steam drum (22),
**characterized in that**
a solar steam generator (36) is connected to the steam drum (22) in a second circuit (39).

2. Energy generating installation according to claim 1, **characterized in that** the steam drum (22) is connected with a steam outlet (30) from where process steam is supplied to an external consumer.

3. Energy generating installation according to claim 1 or 2, **characterized in that** the first circuit (27) contains a pump (28) which is controlled in dependence on the water level (32) in the steam drum (22).

4. Energy generating installation according to one of claims 1 to 3, **characterized in that** the second circuit (39) contains a pump (40) which is controlled in dependence on the water level (32) in the steam drum (22).

5. Energy generating installation according to one of claims 1 to 4, **characterized in that** the waste heat boiler (19) comprises a burner (34) which is controlled in dependence on the steam flow leaving the steam drum (22).

6. Energy generating installation according to one of claims 1 to 5, **characterized in that** the feedwater is supplied via a feedwater pump (26) which is controlled in dependence on the steam flow leaving the steam drum (22).

## Revendications

1. Installation de production d'énergie comportant
une turbine à gaz (10) entraînant un générateur de courant (11),
une chaudière de récupération de chaleur (19), qui comprend un échangeur de chaleur (21) relié à l'échappement (18) de la turbine à gaz (10), et un tambour de vapeur (22),
l'échangeur de chaleur (21) présentant :
un surchauffeur (22) qui chauffe de la vapeur délivrée par le tambour de vapeur (22) et la délivre à la turbine à gaz (10) pour l'injection de vapeur,
un évaporateur (23) formant avec le tambour de vapeur (22) un premier circuit (27),
et un préchauffeur (24) qui réchauffe de l'eau d'alimentation et la délivre au tambour de vapeur (22),
**caractérisée en ce qu'**un générateur de vapeur solaire (36) est relié au tambour de vapeur (22) dans un deuxième circuit (39).

2. Installation de production d'énergie selon la revendication 1, **caractérisée en ce que** le tambour de vapeur (22) est relié à un échappement de vapeur (30) débitant de la vapeur de process à un consommateur externe.

3. Installation de production d'énergie selon la revendication 1 ou 2, **caractérisée en ce que** le premier circuit (27) contient une pompe (28) qui est commandée en fonction du niveau d'eau (32) dans le tambour de vapeur (22).

4. Installation de production d'énergie selon une des revendications 1 à 3, **caractérisée en ce que** le deuxième circuit (39) contient une pompe (40) qui est commandée en fonction du niveau d'eau (32) dans le tambour de vapeur (22).

5. Installation de production d'énergie selon une des revendications 1 à 4, **caractérisée en ce que** la chaudière de récupération de chaleur (19) présente un brûleur (34) qui est commandé en fonction du débit de vapeur quittant le tambour de vapeur (22).

6. Installation de production d'énergie selon une des revendications 1 à 5, **caractérisée en ce que** l'eau d'alimentation est délivrée par l'intermédiaire d'une pompe d'alimentation (26) qui est commandée en fonction du débit de vapeur quittant le tambour de vapeur (22).
